# EUROPÄISCHE PATENTSCHRIFT

(11) **EP 3 709 383 B1**
(45) Veröffentlichungstag und Bekanntmachung des Hinweises auf die Patenterteilung: **30.03.2022**
(21) Anmeldenummer: 20156011.7
(22) Anmeldetag: 07.02.2020
(51) Int. Cl.: H01M 50/10, H01M 50/20, H01M 50/308, H01M 50/342

(54) **BATTERIEGESTELL**
BATTERY FRAME
CADRE DE BATTERIE

(30) Priorität: 11.03.2019 DE 202019101373 U
(43) Veröffentlichungstag der Anmeldung: 16.09.2020
(73) Patentinhaber: HOPPECKE Batterien GmbH & Co. KG., 59929 Brilon (DE)
(72) Erfinder: BÜTER, Matthias, 33100 Paderborn (DE)
(74) Vertreter: Brinkmann & Partner

(56) Entgegenhaltungen:
- EP-A1- 2 475 028
- WO-A1-2014/065110
- WO-A1-2016/026051
- DE-A1-102014 012 568
- US-A1- 2019 006 650

## Beschreibung

Die Erfindung betrifft ein Batteriegestell zur Aufnahme eines prismatische Lithium-Ionen-Zellen aufweisenden Lithium-Ionen-Akkumulatormoduls, mit einem einen Aufnahmeraum für das Akkumulatormodul bereitstellenden Gehäuse, das stirnseitig offen ausgebildet ist und ein Bodenteil, ein Deckenteil und zwei das Bodenteil mit dem Deckenteil verbindende Seitenteile aufweist, mit einem unter Belassung eines Spaltraums beabstandet zum Deckenteil angeordneten Trennblech, das zur Ausbildung einer strömungstechnischen Verbindung zwischen Spaltraum und Aufnahmeraum Durchtrittsöffnungen aufweist, sowie mit zwei Stirnseitenteilen für einen stirnseitigen Verschluss des Gehäuses, wobei die Stirnseitenteile jeweils einen labyrinthförmig ausgebildeten Strömungskanal für einen strömungstechnischen Anschluss des Spaltraums an die das Gehäuse umgebende Atmosphäre aufweist.

Batteriegestelle der eingangsgenannten Art sind aus dem Stand der Technik an sich bekannt, weshalb es eines gesonderten druckschriftlichen Nachweises an dieser Stelle nicht bedarf. Es sei deshalb auch nur beispielhaft auf die EP 2 475 028 A1 verwiesen, die ein gattungsgemäßes Batteriegestell offenbart. So offenbart die EP 2 475 028 A1 in einer Ausführungsform ein Gehäuse, das einen Spaltraum für eine Gasableitung zur Verfügung stellt. Dieser Spaltraum ist an einen endseitig des Gehäuses vorgesehenen Kanal angeschlossen, wobei dieser Kanal einen eigenen Strömungsweg bereitstellt. An diesen Kanal ist ein zweiter Kanal angeschlossen, wobei auch dieser zweite Kanal einen eigenen Strömungsweg bereitstellt. Ein im Havariefall entstehendes Gas wird aus dem Spaltraum in den ersten Kanal und von dort aus in den zweiten Kanal geführt. Dabei erfährt das Gas eine Umlenkung, und zwar beim Übertritt aus dem ersten Kanal in den zweiten Kanal.

Ein Batteriegestell dient der Aufnahme eines Akkumulatormoduls, das eine Mehrzahl von elektrisch miteinander verschalteten Akkumulatorzellen aufweist. Je nach Baugröße des Batteriegestells kann auch die Aufnahme mehrerer Akkumulatormodule vorgesehen sein, die dann ihrerseits ebenfalls miteinander elektrisch verschaltet sind.

Gemäß einer typischen Bauform kommen als Akkumulatorzellen Bleiakkumulatorzellen zum Einsatz. Von Nachteil derartiger Bleiakkumulatorzellen ist allerdings, dass sie zur Aufnahme oder Abgabe hoher Ströme innerhalb eines vergleichsweise kurzen Zeitraums weniger gut geeignet sind. Gerade aber die Eigenschaft, hohe Ströme innerhalb eines vergleichsweise kurzen Zeitraums aufnehmen oder abgeben zu können, ist eine immer häufiger erwünschte Eigenschaft, so zum Beispiel bei als Traktionsbatterien genutzten Akkumulatoren.

Um der Eigenschaftsanforderung der Hochstromeignung gerecht zu werden, sind aus dem Stand der Technik Akkumulatoren bekannt geworden, die nicht auf Basis von Bleiakkumulatorzellen, sondern auf Basis von Lithium-Ionen-Akkumulatorzellen, insbesondere prismatischen Lithium-Ionen-Zellen aufgebaut sind. Denn der Vorteil solcher Lithium-Ionen-Zellen besteht darin, dass sie hohe Ströme in vergleichsweise kurzer Zeit sowohl bereitstellen, als auch aufnehmen können. Von Nachteil bei Lithium-Ionen-Zellen ist jedoch, dass eine Tiefenentladung vermieden werden muss, genauso wie eine Überladung. Insbesondere ein Überladen von Lithium-Ionen-Zellen ist insoweit gefährlich, als dass es zu einer Brandauslösung oder gar Explosion kommen kann. Derartige Brände lassen sich dem Grunde nach nicht oder zumindest nur sehr schwer löschen, weil beim Brand einer Lithium-Ionen-Zelle Sauerstoff entsteht, so dass es mit herkömmlichen Löschmitteln, die die Sauerstoffzufuhr unterbinden, nicht möglich ist, Lithium-Ionen-Zellen zu löschen.

Kommt es zu einem Brand einer Lithium-Ionen-Zelle besteht insbesondere bei mehreren miteinander zu einem Modul verschalteten Zellen die Gefahr, dass der Brand auf benachbarte Lithium-Ionen-Zellen übergreift, so dass infolge der Überladung nur einer Lithium-Ionen-Zelle die Gefahr droht, dass das gesamte Akkumulatormodul abbrennt. Dieser Nachteil wiegt umso schwerer, wenn mehrere miteinander verschaltete Akkumulatormodule vorgesehen sind.

Neben der Gefahr eines Brandübertrags auf nebengeordnete Objekte und/oder Gebäudeteile ist der betriebswirtschaftliche Schaden zum Teil erheblich, denn Lithium-Ionen-Zellen sind in der Anschaffung sehr teuer.

Aus der DE 10 2014 012 568 A1 ist eine Akkumulatorvorrichtung bekannt mit zumindest einem Satz aus zumindest einer Lithium-Ionen-Zelle, einer Umhüllung, die den Satz zumindest teilweise umgibt und so ausgebildet ist, dass bei einem Versagen einer Lithium-Ionen-Zelle entstehende Gase in zumindest einen Strömungspfad abgegeben werden, und einer als Flammen- und/oder Funkensperre wirkenden Durchschlagsperre. Des Weiteren ist eine Abscheidevorrichtung zum Abscheiden von Partikeln aus den Gasen vorgesehen, die im Strömungspfad der Gase vor der Durchschlagsperre angeordnet ist.

Die DE 10 2014 219 720 A1 betrifft eine Batterie mit einem Batteriegehäuse und zumindest einer Batteriezelle und zumindest einem Sensor, welcher zumindest einen Dehnungssensor enthält oder daraus besteht, welcher dazu eingerichtet ist, eine Größenänderung des Batteriegehäuses und/oder der Batteriezelle zu erfassen. Zudem betrifft die DE 10 2014 219 720 A1 ein Verfahren zur Steuerung oder Regelung der Ladung und/oder Entladung einer Batterie.

Die DE 10 2012 019 676 A1 offenbart einen Akku-Transportbehälter mit einer flexiblen Hülle, die einen Innenraum umschließt und eine Öffnung besitzt. Es ist zudem eine schlauchartige Abgasleitung vorgesehen, die an die Öffnung angeschlossen ist und eine Lage an temperaturbeständigem Textil umfasst.

Die DE 20 2012 104 578 U1 offenbart ein modulares Batteriegestell. Dieses verfügt über eine Mehrzahl von nach dem Baukastenprinzip miteinander kombinier- und stapelbaren Gestellgrundelementen zur jeweiligen Aufnahme einer Mehrzahl von Batterien. Es sind des Weiteren Gestellabdeckungen vorgesehen, wobei je Gestellgrundelement eine Gestellabdeckung Verwendung findet.

Aus der US 2012/0164490 A1 ist ein Batteriemodul bekannt, das über ein Gehäuse verfügt, in dem eine Vielzahl von Zellen untergebracht sind. Die Zellen sind oberseitig von einer Platte abgedeckt, die je Zelle über eine Entlüftungsöffnung verfügt. Oberhalb dieser Platte ist eine Trennwand angeordnet, und zwar unter Beabstandung zur Platte, so dass zwischen Platte und Trennwand ein Volumenraum entsteht, an den die Entlüftungsöffnungen strömungstechnisch angeschlossen sind. Oberhalb der Trennwand ist eine weitere Platte vorgesehen, wobei zwischen dieser weiteren Platte und der Trennwand ein weiterer Volumenraum ausgebildet ist. Zusammen bilden die beiden Volumenräume, d.h. der erste Volumenraum zwischen erster Platte und Trennwand sowie der zweite Volumenraum zwischen Trennwand und zweiter Platte eine Abgasleitung aus.

Die WO 2007/107137 A1 offenbart ein Energiesystem für ein Elektro- oder Hybridfahrzeug, das über einen Energiespeicher verfügt, dem ein Absorber für austretendes Gas zugeordnet ist. Zur Überführung von austretendem Gas in den Absorber sind entsprechende Gasableitungen vorgesehen.

Aus der WO 2014/065110 A1 ist eine Akkumulatorzelle bekannt, die über eine Mehrzahl von zu einem Stack miteinander kombinierten Zellen verfügt, wobei innerhalb eines die Zellen aufnehmenden Gehäuses Sensoren zur Gasdetektion angeordnet sind. Die Sensoren dienen dazu, im Defektfall austretendes Gas detektieren zu können. Zudem verfügt jede Zelle über ein explosionsgeschütztes Ventil, das im Überdruckfall insbesondere während eines Aufladevorgangs öffnet.

Es ist ausgehend vom Vorbeschriebenen die **Aufgabe** der Erfindung, ein Batteriegestell der eingangsgenannten Art, konstruktiv derart weiterzubilden, dass bei gleichzeitig effektivem Brandschutz für von benachbarten Batteriegestellen aufgenommenen Akkumulatormodulen ein einfacher Aufbau gegeben ist, der sowohl im Montage- als auch im Demontagefall eine einfache Bestückung erlaubt.

Zur **Lösung** dieser Aufgabe wird mit der Erfindung vorgeschlagen, ein Batteriegestell der gattungsgemäßen Art, das sich dadurch auszeichnet, dass das Gehäuse zumindest abschnittsweise von einer Umhüllung aus einem mineralhaltigen Textil umgeben ist.

Das Batteriegestell verfügt über ein Gehäuse, das einen Aufnahmeraum für das Akkumulatormodul bereitstellt. Zwecks einer Bestückung mit einem Akkumulatormodul ist das Gehäuse zumindest an einer Stirnseite offen ausgebildet. Im endmontierten Zustand ist diese offene Stirnseite mittels eines Stirnseitenteils verschlossen.

Das Gehäuse weist ein Bodenteil, ein Deckenteil und zwei Seitenteile auf, wobei die beiden Seitenteile das Bodenteil mit dem Deckenteil verbinden. Es ist so eine Art rohrförmige Ausgestaltung gegeben, wobei die Seitenteile und das Bodenteil bzw. das Deckenteil jeweils rechtwinkelig zueinander ausgerichtet sind, so dass im Querschnitt eine rechteckförmige Ausgestaltung des Gehäuses gegeben ist.

Es ist des Weiteren ein Trennblech vorgesehen, das unter Belassung eines Spaltraums beabstandet zum Deckenteil angeordnet ist. Bevorzugter Weise sind das Deckenteil und das Trennblech parallel zueinander verlaufend ausgerichtet. Dabei unterteilt das Trennblech den vom Gehäuse insgesamt bereitgestellten Volumenraum in den Aufnahmeraum für das Akkumulatormodul und den Spaltraum zwischen Deckenteil und Trennblech. Mit Bezug auf die Höhenrichtung des Batteriegestells ist der Spaltraum oberhalb des Aufnahmeraums angeordnet, das heißt im endmontierten Zustand befindet sich der Spaltraum oberhalb des vom Aufnahmeraum aufgenommenen Akkumulatormoduls.

Das Trennblech ist mit Durchtrittsöffnungen ausgerüstet. Es ist so eine strömungstechnische Verbindung zwischen Spaltraum und Aufnahmeraum ausgebildet. Diese strömungstechnische Verbindung dient im Brandfall dazu, im Aufnahmeraum entstehende Gase in den Spaltraum ableiten zu können.

Es sind des Weiteren zwei Stirnseitenteile vorgesehen, die dem stirnseitigen Verschluss des Gehäuses dienen. Dabei stellt ein jedes Stirnseitenteil jeweils einen Strömungskanal zur Verfügung, der labyrinthförmig ausgebildet ist. Dabei meint "labyrinthförmig" im Sinne der Erfindung, dass ein Strömungskanal gegeben ist, der zumindest eine Umlenkung für ein den Strömungskanal passierendes Gas aufweist.

Der Strömungskanal eines Stirnseitenteils dient dazu, einen strömungstechnischen Anschluss des Spaltraums an die das Gehäuse umgebende Atmosphäre auszubilden. Es kann so ein im Spaltraum befindliches Gas an die Außenatmosphäre, das heißt an die das Gehäuse umgebende Atmosphäre abgeführt werden.

Das vom Gehäuse des Batteriegestells aufgenommene Akkumulatormodul verfügt über mehrere miteinander verschaltete prismatische Lithium-Ionen-Zellen, wobei die Zellen je nach gewünschter Kapazität parallel und/oder in Reihe miteinander verschaltet sind. Prismatische Lithium-Ionen-Zellen verfügen über ein sogenanntes Venting-Ventil, das sich im Falle eines thermischen Durchgehens der Zelle öffnet. Die im Brandfall einer Zelle entstehenden Gase können so aus der Zelle entweichen.

Das den Spaltraum vom Aufnahmeraum trennende Trennblech ist mit einer Durchtrittsöffnung ausgerüstet. Es sind bevorzugter Weise eine Mehrzahl von Durchtrittsöffnungen vorgesehen, so dass sichergestellt ist, dass im Brandfall entstehende Gase in den vom Gehäuse beherbergten Spaltraum überführt werden könne. Besonders bevorzugt ist es, je Venting-Ventil eine Durchtrittsöffnung vorzusehen, die dem jeweils zugehörigen Venting-Ventil direkt gegenüberliegend ausgebildet ist. Es kann so im Brandfall eine direkte Ableitung der entstehenden Gase in den auch als Gasungsraum zu bezeichnenden Spaltraum stattfinden.

Das im Falle einer Propagation freiwerdende Gas wird im Spaltraum zu einer Übersättigung geführt, wobei durch die Übersättigung die Bildung eines zündfähigen Gasgemisches verhindert ist. Dies erlaubt ein Abführen an die das Gehäuse umgebende Atmosphäre.

Dabei ist durch die labyrinthförmige Ausgestaltung der Strömungskanäle sichergestellt, dass einerseits die entstehenden Gase kontrolliert nach außen geführt werden, und dass andererseits unter Umständen sogar glühende Brandrückstände zurückgehalten werden.

Erfindungsgemäß ist vorgesehen, dass das Gehäuse zumindest abschnittsweise von einer Umhüllung aus einem mineralhaltigen Textil umgeben ist. Dieses Textil dient als Wärmeisolation und schützt im Brandfall benachbarte Batteriegestelle vor einem ungewollten thermischen Eintrag. Dabei umgibt das mineralhaltige Textil das Gehäuse nach Art einer Umhüllung und liegt außenseitig am Bodenteil, am Deckelteil und an den beiden Seitenwandteilen an. Eine stirnseitige Wärmeisolierung des Batteriegestells ist durch die beiden jeweils doppelwandig ausgebildeten Stirnseitenteile gegeben, was durch das in den Strömungskanälen der Stirnseitenteile jeweils angeordnete Vlies noch unterstützt ist. Im Brandfall ist mithin ein Wärmeübertrag in benachbarte Batteriegestelle wirksam unterbunden, wobei aufgrund der konstruktiven Ausgestaltung des erfindungsgemäßen Batteriegestells zudem sichergestellt ist, dass etwaige Brandgase gezielt abgeführt werden können, so dass nicht die Gefahr eines explosionsartigen Berstens besteht.

Insgesamt wird mit der erfindungsgemäßen Ausgestaltung ein Batteriegestell vorgeschlagen, das einerseits eine sichere Einhausung von Akkumulatormodulen auch im Brandfall ermöglicht und zwar insbesondere derart, dass die Gefahr eines Überschlags auf Akkumulatormodule benachbarter Batteriegestellte minimiert ist. Darüber hinaus erlaubt die erfindungsgemäße Konstruktion eine einfache Bestückung des Batteriegestells mit einem davon im endmontierten Zustand beherbergten Akkumulatormodul.

Es ist gemäß einem weiteren Merkmal der Erfindung vorgesehen, dass ein Stirnseitenteil doppelwandig ausgebildet ist und ein Außenblech mit einer Auslassöffnung und ein dazu beabstandetes Kiemenblech mit einer Durchtrittsöffnung aufweist. Infolge der doppelwandigen Ausgestaltung des Stirnseitenteils ist der je Stirnseitenteil erfindungsgemäß vorgesehene labyrinthförmig ausgebildete Strömungskanal gegeben. Dabei verfügt ein jedes Stirnseitenteil über ein Außenblech einerseits und ein Kiemenblech andererseits. Diese beiden Bleche sind voneinander beabstandet angeordnet, wodurch sich der Strömungskanal ergibt.

Zwecks strömungstechnischer Verbindung des Strömungskanals mit der das Gehäuse umgebenen Atmosphäre ist das Außenblech mit einer Auslassöffnung ausgestattet. Über diese findet im Brandfall eine zentrale Abgabe etwaiger im Gehäuseinneren entstehender Brandgase statt.

Das zum Außenblech beabstandete Kiemenblech verfügt über Durchtrittsöffnungen, durch die hindurch im Brandfall unter Umständen entstehende Gase in den Zwischenraum zwischen Außenblech und Kiemenblech gelangen, von wo aus dann eine Abgabe über die im Außenblech ausgebildete Auslassöffnung stattfindet.

Durch die doppelwandige Ausgestaltung des Stirnseitenteils entsteht ein Strömungskanal, der über zwei Kanalabschnitte verfügt, die strömungstechnisch mittels der im Kiemenblech ausgebildeten Durchtrittsöffnung miteinander verbunden sind. Dabei stehen der eine Strömungskanalabschnitt mit dem Spaltraum und der andere Strömungskanalabschnitt mit der Außenatmosphäre in strömungstechnischer Verbindung. Im Brandfall entstehende Gase können mithin aus dem Spaltraum in den ersten Strömungskanalabschnitt und von dort aus durch die im Kiemenblech ausgebildete Durchtrittsöffnung in den zweiten Strömungskanalabschnitt gelangen. Durch diese Strömungsumlenkung ist die labyrinthförmige Ausgestaltung des Strömungskanals realisiert.

Es ist gemäß einem weiteren Merkmal der Erfindung vorgesehen, dass in den Strömungskanälen der Stirnseitenteile und/oder in dem vom Gehäuse bereitgestellten Spaltraum ein Vliesmaterial angeordnet ist. Dieses Vliesmaterial dient als Diffusionshemmung, wodurch ein freies Abströmen austretender Gase in die Außenatmosphäre verhindert ist, was die Ausbildung einer Gasübersättigung im Spaltraum zusätzlich unterstützt.

Gemäß einem weiteren Merkmal der Erfindung ist vorgesehen, dass dem in Beschickungsrichtung des Gehäuses hinteren Stirnseitenteil ein Abstandshalter zugeordnet ist, an dem das Akkumulatormodul im endmontieren Zustand anliegt.

Bei einer bestimmungsgemäßen Bestückung des Gehäuses mit einem Akkumulatormodul wird das Akkumulatormodul durch die dafür vorgesehene stirnseitige Öffnung des Gehäuses geführt und in Beschickungsrichtung in den vom Gehäuse bereitgestellten Aufnahmeraum hineinverbracht. Dabei wird das Akkumulatormodul soweit in den vom Gehäuse bereitgestellten Aufnahmeraum geführt, bis das Akkumulatormodul auf Anschlag am Abstandshalter zu liegen kommt. In dieser Position schließt das Gehäuse des Akkumulatormoduls frontseitig mit der stirnseitigen Öffnung des Gehäuses bündig ab. Gemäß einem weiteren Merkmal der Erfindung ist vorgesehen, dass der Abstandshalter ein Blech ist, das sich zwischen Bodenteil und Trennblech erstreckt. Das Blech dient insoweit nicht nur als Begrenzung für den Aufnahmeraum, es schließt diesen vielmehr vollständig ab. Insoweit ist der vom Gehäuse bereitgestellte Aufnahmeraum mittels des Abstandshalters einseitig verschlossen ausgebildet.

Gemäß einer bevorzugten Ausführungsform der Erfindung ist vorgesehen, dass der Abstandshalter und das Trennblech als abgewinkeltes Blech einstückig ausgebildet sind. Diese Konstruktion erweist sich als besonders einfach, insbesondere bei einer Montage des erfindungsgemäßen Batteriegestells. Darüber hinaus wird durch diese Art der Ausgestaltung die Eigenstabilität des Gehäuses und damit auch die des Batteriegestells erhöht.

Gemäß einem weiteren Merkmal der Erfindung ist vorgesehen, dass in dem mineralhaltigen Textil Wasser gebunden ist. Dieses verflüchtet sich durch Verdampfen bei einer Temperatur von beispielsweise über 70° C, was zu einem Kühlen führt, und zwar sowohl des brandbetroffenen Gehäuses, als auch etwaiger benachbarter Batteriegestelle. Es wird so ein nicht gewollter Wärmeübertrag in benachbarte Batteriegestelle zusätzlich unterstützt.

Es ist gemäß einem weiteren Merkmal der Erfindung vorgesehen, dass die Auslassöffnung und die Durchlassöffnung eines Stirnseitenteils in Höhenrichtung beabstandet zueinander angeordnet sind. Hierdurch ist die Labyrinthführung im Strömungskanal bedingt, wobei der von einem im Strömungskanal befindlichen Gas zurückzulegende Strömungsweg umso länger ist, je weiter die Auslassöffnung und die Durchlassöffnung voneinander entfernt sind. Es ist deshalb bevorzugt, die Auslassöffnung in Höhenrichtung möglichst weit oben und die Durchlassöffnung in Höhenrichtung möglichst weit unten zu positionieren.

Es ist gemäß einem weiteren Merkmal der Erfindung vorgesehen, dass das Gehäuse Stapelhilfen zur in Höhenrichtung Übereinanderordnung zweier Gehäuse aufweist. Dabei sollen die Stapelhilfen insbesondere dazu dienen, ein unfallsicheres Übereinordnen mehrerer Batteriegestelle zu erleichtern.

Weitere Merkmale und Vorteile der Erfindung ergeben sich aus der nachfolgenden Beschreibung anhand der Figuren. Dabei zeigen
- Fig. 1: in perspektivischer Schnittansicht ein erfindungsgemäßes Batteriegestell und
- Fig. 2: in einer vergrößerten Ausschnittsdarstellung das Batteriegestell nach Figur 1.

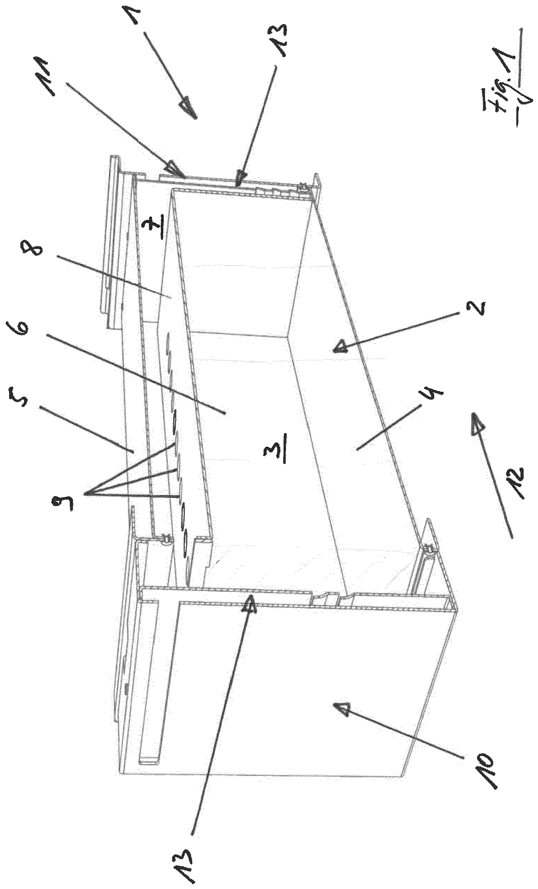

Figur 1 zeigt in einem Längsschnitt in perspektivischer Darstellung ein erfindungsgemäßes Batteriegestell 1. Dieses verfügt über ein Gehäuse 2, das zwecks Aufnahme eines aus mehreren Lithium-Ionen-Zellen gebildeten Akkumulatormoduls einen Aufnahmeraum 3 bereitstellt.

Der besseren Übersicht wegen ist das im endmontieren Zustand von Gehäuse 2 aufgenommene Akkumulatormodul in den Figuren nicht dargestellt.

Das Gehäuse 2 weist ein Bodenteil 4, ein dem Bodenteil 4 gegenüberliegend angeordnetes Deckenteil 5 sowie zwei Seitenteile 6 auf, die das Bodenteil 4 mit dem Deckenteil 5 verbinden. Bei den Gehäuseteilen handelt es sich vorzugsweise um Metallbleche, die miteinander vorzugsweise stoffschlüssig verbunden sind.

Das Gehäuse 2 stellt einerseits den Aufnahmeraum 3 für ein Akkumulatormodul bereit, sowie andererseits einen Spaltraum 7, der in Höhenrichtung 26 oberhalb des Aufnahmeraums 3 angeordnet ist. Zwecks Trennung zwischen Aufnahmeraum 3 und Spaltraum 7 ist ein Trennblech 8 vorgesehen, das unter Belassung des Spaltraums 7 beabstandet zum Deckenteil 5 angeordnet ist. Mittels des Trennblechs 8 wird mithin der vom Gehäuse 2 insgesamt bereitgestellte Volumenraum in den Aufnahmeraum 3 und den Spaltraum 7 unterteilt.

Das Trennblech 8 ist mit Durchtrittsöffnungen 9 ausgerüstet, so dass im Brandfall entstehende Gase in den Spaltraum 7 gelangen können.

Stirnseitig ist das Gehäuse 2 mittels eines jeweiligen Stirnseitenteils 10 bzw. 11 ausgerüstet, wobei in Beschickungsrichtung 12 ein vorderes Stirnseitenteil 10 und ein hinteres Stirnseitenteil 11 vorgesehen sind.

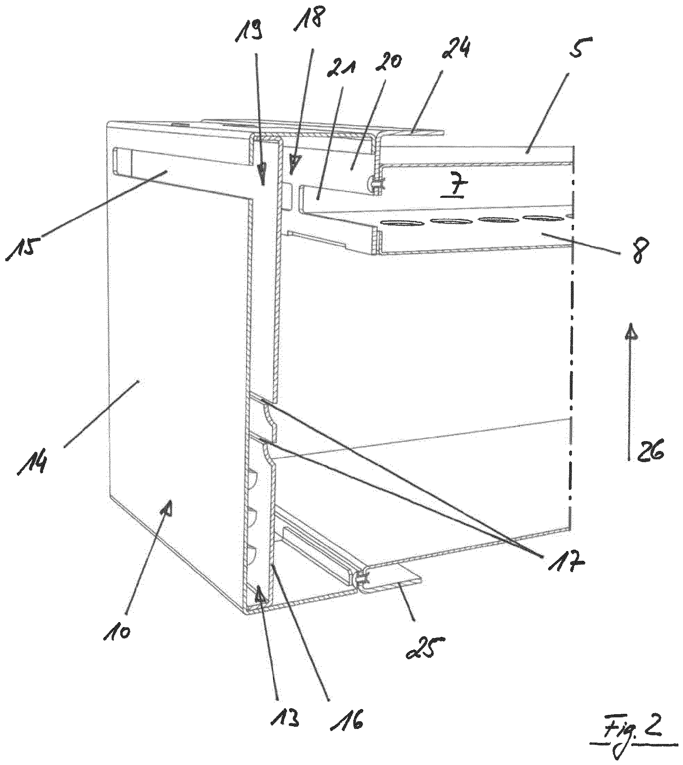

Wie insbesondere die Ausschnittsdarstellung nach Figur 2 anhand des vorderen Stirnseitenteils 10 beispielhaft erkennen lässt, ist ein Stirnseitenteil 10 bzw. 11 doppelwandig ausgebildet. Es weist ein Außenblech 14 einerseits sowie ein dazu beabstandetes Kiemenblech 16 andererseits auf.

Das Außenblech 14 ist mit einer Auslassöffnung 15 ausgerüstet und das Kiemenblech verfügt über eine Durchtrittsöffnung 17. Es ist so ein Strömungskanal 13 ausgebildet, der über zwei Kanalabschnitte 18 und 19 verfügt, nämlich mit Bezug auf die Zeichnungsebene nach Figur 2 über einen ersten Kanalabschnitt 18, der rechtsseitig des Kiemenbleches 16 ausgebildet ist und über einen zweiten Kanalabschnitt 19, der linksseitig des Kiemenbleches 16 ausgebildet ist. Zusammen bilden die beiden Kanalabschnitte 18 und 19 den insgesamt labyrinthförmig ausgebildeten Strömungskanal 13.

Im Brandfall in den Spaltraum 7 überführte Gase können über die Strömungskanäle 13 in den Stirnseitenteilen 10 und 11 in die das Gehäuse 2 umgebende Atmosphäre abgeführt werden. Dabei strömt ein im Brandfall entstehendes Gas zunächst in den ersten Kanalabschnitt 18 ein, gelangt dann über die im Kiemenblech 16 ausgebildeten Durchtrittsöffnungen 17 in den zweiten Kanalabschnitt 19, von wo aus dann ein Überführen durch die Auslassöffnung 15 hindurch in die Außenatmosphäre stattfindet.

Zur lagesicheren Positionierung und Aussteifung der gesamten Konstruktion dient zur stirnseitig beabstandeten Anordnung des Trennblechs 8 gegenüber dem Deckenteil 5 ein Verbindungsblech 20. Dieses ist mit Öffnungen 21 ausgerüstet, womit eine strömungstechnische Verbindung zwischen dem Spaltraum 7 und dem ersten Kanalabschnitt 18 des Strömungskanals 13 geschaffen ist.

Dem in Beschickungsrichtung 12 hinteren Stirnseitenteil 11 ist ein Abstandshalter 22 zugeordnet. Dieser dient dazu, einem Akkumulatormodul im Beschickungsfall als Anschlag zu dienen. Für eine bestimmungsgemäße Beschickung des Gehäuses 2 mit einem Akkumulatormodul ist das in Beschickungsrichtung 12 vordere Stirnseitenteil 10 vom Gehäuse 2 zu trennen. Da das Gehäuse 2 stirnseitig offen ausgebildet ist, kann ein in den Aufnahmeraum 3 einzusetzendes Akkumulatormodul durch die stirnseitig offene Öffnung des Gehäuses 2 hindurch in den Aufnahmeraum 3 des Gehäuses 2 eingeführt werden. Dieses wird sodann in Beschickungsrichtung 12 in das Gehäuse 2 geschoben, bis es auf Anschlag am Abstandshalter 22 zu liegen kommt. In dieser Endlage schließt das Akkumulatormodul mit seinem modulseitigen Gehäuse bündig mit der offenen Seite des Gehäuses 2 ab. Im Ergebnis ist so sichergestellt, dass die gehäuseseitigen ersten Kanalabschnitte 18 der beiden Strömungskanäle 13 vom ersten Stirnseitenteil 10 einerseits und vom zweiten Stirnseitenteil 11 andererseits querschnittsgleich ausgebildet sind. Dabei findet eine Begrenzung des Kanalabschnitts 18 hinsichtlich des hinteren Stirnseitenteils 11 durch den Abstandshalter 22 und hinsichtlich des vorderen Stirnseitenteils 10 durch das modulseitige Gehäuse statt.

Die Strömungskanäle 13 und der Spaltraum 7 sind in bevorzugter Weise mit einem in den Figuren nicht näher dargestellten Vliesmaterial befüllt. Dieses Vliesmaterial dient als Diffusionshemmung für in den Spaltraum 7 im Brandfall einströmendes Gas, wodurch eine Gasübersättigung erreicht ist, wobei durch die Übersättigung die Bildung eines zündfähigen Gasgemisches verhindert ist.

Das Gehäuse 2 ist bevorzugter Weise von einer in den Figuren ebenfalls nicht dargestellten Umhüllung aus einem mineralhaltigen Textil umgeben. Dabei liegt die Umhüllung außenseitig am Bodenteil 4, am Deckenteil 5 sowie an den Seitenteilen 6 an. Zwecks einer Positionsfixierung der Umhüllung sind Rückhaltefortsätze 24 und 25 (vergl. Fig. 2) vorgesehen, die die Umhüllung zwischen dem jeweiligen Rückhaltefortsatz 24 und 25 und dem zugehörigen Gehäuseteil, das heißt dem Deckenteil 5 bzw. dem Bodenteil 4 einklemmen.

Wie die Darstellung nach Figur 2 erkennen lässt, sind einerseits der Rückhaltefortsatz 24 und das Verbindungsblech 20 als auch andererseits der Rückhaltefortsatz 25 und das Bodenteil 4 jeweils als abgewinkeltes Blech einstückig ausgebildet. Auch der Abstandshalter 22 und das Trennblech 8 sind als abgewinkeltes Blech einstückig ausgebildet. Es ist so in vorteilhafter Weise eine denkbar einfache Konstruktion geschaffen, die einfach zu montieren und im endmontierten Zustand formstabil ist.

Auch die Seitenwandteile 10 bzw. 11 sind aus jeweils abgewinkelten Blechen zusammengesetzt, was gleichfalls einer vereinfachten Montage bei gleichzeitiger Formstabilität dient, darüber hinaus aber auch sicherstellt, dass die Kanalabschnitte 18 und 19 eines Strömungskanals 13 Batteriegestell übergreifend stets gleich groß ausgebildet sind.

Zumindest das in Beschickungsrichtung vordere Stirnseitenteil 10 ist abnehmbar am Gehäuse 2 angeordnet, was bevorzugter Weise durch eine werkzeuglos zu bedienende Klemmeinrichtung realisiert ist.

Im endmontierten Zustand können eine Mehrzahl von erfindungsgemäßen Batteriegestellen in Höhenrichtung 26 übereinander angeordnet sein. Zur Unterstützung einer sicheren Übereinanderstapelung mehrerer Batteriegestelle ist je Batteriegestell vorzugsweise eine Stapelhilfe 23 vorgesehen. Diese ist im gezeigten Ausführungsbeispiel als abgewinkelte Blechkante ausgebildet, an der ein in Höhenrichtung 26 darüber angeordnetes Batteriegestell im endmontierten Zustand anliegt.

### Bezugszeichen

- 1: Batteriegestell
- 2: Gehäuse
- 3: Aufnahmeraum
- 4: Bodenteil
- 5: Deckenteil
- 6: Seitenteil
- 7: Spaltraum
- 8: Trennblech
- 9: Durchtrittsöffnung
- 10: vorderes Stirnseitenteil
- 11: hinteres Stirnseitenteil
- 12: Beschickungsrichtung
- 13: Strömungskanal
- 14: Außenblech
- 15: Auslassöffnung
- 16: Kiemenblech
- 17: Durchtrittsöffnung
- 18: Kanalabschnitt
- 19: Kanalabschnitt
- 20: Verbindungsblech
- 21: Öffnung
- 22: Abstandshalter
- 23: Stapelhilfe
- 24: Rückhaltefortsatz
- 25: Rückhaltefortsatz
- 26: Höhenrichtung

## Patentansprüche

1. Batteriegestell zur Aufnahme eines prismatische Lithium-Ionen-Zellen aufweisenden Lithium-Ionen-Akkumulatormoduls, mit einem einen Aufnahmeraum (3) für das Akkumulatormodul bereitstellenden Gehäuse (2), das stirnseitig offen ausgebildet ist und ein Bodenteil (4), ein Deckenteil (5) und zwei das Bodenteil (4) mit dem Deckenteil (5) verbindende Seitenteile (6) aufweist, mit einem unter Belassung eines Spaltraums (7) beabstandet zum Deckenteil angeordneten Trennblech (9), das zur Ausbildung einer strömungstechnischen Verbindung zwischen Spaltraum (7) und Aufnahmeraum (3) Durchtrittsöffnungen (9) aufweist, sowie mit zwei Stirnseitenteilen (10, 11) für einen stirnseitigen Verschluss des Gehäuses (2), wobei die Stirnseitenteile (10, 11) jeweils einen labyrinthförmig ausgebildeten Strömungskanal (13) für einen strömungstechnischen Anschluss des Spaltraums (7) an die das Gehäuse (2) umgebende Atmosphäre aufweist, **dadurch gekennzeichnet, dass** das Gehäuse (2) zumindest abschnittsweise von einer Umhüllung aus einem mineralhaltigen Textil umgeben ist.

2. Batteriegestell nach Anspruch 1, **dadurch gekennzeichnet, dass** ein Stirnseitenteil (10, 11) doppelwandig ausgebildet ist und ein Außenblech (14) mit einer Auslassöffnung (15) und ein dazu beabstandetes Kiemenblech (16) mit einer Durchtrittsöffnung (17) aufweist.

3. Batteriegestellt nach Anspruch 1 oder 2, **dadurch gekennzeichnet, dass** in den Strömungskanälen (13) der Stirnseitenteile (10, 11) und/oder in dem vom Gehäuse (2) bereitgestellten Spaltraum (7) ein Vliesmaterial angeordnet ist.

4. Batteriegestell nach einem der vorhergehenden Ansprüche, **dadurch gekennzeichnet, dass** dem in Beschickungsrichtung (12) des Gehäuses (2) hinteren Stirnseitenteil (11) ein Abstandshalter (22) zugeordnet ist, an dem das Akkumulatormodul im endmontierten Zustand anliegt.

5. Batteriegestell nach Anspruch 4, **dadurch gekennzeichnet, dass** der Abstandshalter (22) ein Blechteil ist, dass sich zwischen Bodenteil (4) und Trennblech (8) erstreckt.

6. Batteriegestell nach Anspruch 5, **dadurch gekennzeichnet, dass** der Abstandshalter (22) und das Trennblech (8) als abgewinkeltes Blech einstückig ausgebildet sind.

7. Batteriegestell nach Anspruch 1, **dadurch gekennzeichnet, dass** die Umhüllung außenseitig am Bodenteil (4), am Deckenteil (5) und an den beiden Seitenwandteilen (6) anliegt.

8. Batteriegestell nach Anspruch 1 oder 7, **dadurch gekennzeichnet, dass** in dem mineralhaltigen Textil Wasser gebunden ist.

9. Batteriegestell nach einem der vorhergehenden Ansprüche 2 bis 8, **dadurch gekennzeichnet, dass** die Auslassöffnung (15) und die Durchtrittsöffnung (17) eines Stirnseitenteils (10, 11) in Höhenrichtung (26) beabstandet zueinander angeordnet sind.

10. Batteriegestell nach einem der vorhergehenden Ansprüche, **dadurch gekennzeichnet, dass** in Beschickungsrichtung (12) des Gehäuses (2) das vordere Stirnseitenteil (10) abnehmbar am Gehäuse (2) angeordnet ist.

## Claims

1. Battery frame for accommodating a lithium-ion battery module having prismatic lithium-ion cells, having a housing (2) which provides an accommodation space (3) for the battery module, which housing is open on the front side and has a base part (4), a top part (5) and two side parts (6) connecting the base part (4) to the top part (5), having a separating plate (9) which is arranged at a distance from the top part while leaving a gap space (7), which separating plate has through-openings (9) for creating a fluidic connection between the gap space (7) and the accommodation space (3), and having two front side parts (10, 11) for closing the housing (2) on the front side, the front side parts (10, 11) each having a labyrinth-shaped flow channel (13) for a fluidic connection of the gap space (7) to the atmosphere surrounding the housing (2), **characterized in that** the housing (2) is surrounded, at least in sections, by an envelope of a mineral-containing textile.

2. Battery frame according to claim 1, **characterized in that** one front side part (10, 11) is of double-walled design and has an outer plate (14) with an outlet opening (15) and a louvered panel (16) spaced therefrom and having a passage opening (17).

3. Battery frame according to claim 1 or 2, **characterized in that** a nonwoven material is arranged in the flow channels (13) of the front side parts (10, 11) and/or in the gap space (7) provided by the housing (2).

4. Battery frame according to any of the preceding claims, **characterized in that** the rear front side part (11) in the charging direction (12) of the housing (2) is assigned a spacer (22), against which the accumulator module rests in the final assembled state.

5. Battery frame according to claim 4, **characterized in that** the spacer (22) is a sheet-metal part which extends between the base part (4) and the separating plate (9).

6. Battery frame according to claim 5, **characterized in that** the spacer (22) and the separating plate (8) are formed integrally as an angled sheet.

7. Battery frame according to claim 1, **characterized in that** the envelope bears on the outside against the bottom part (4), the top part (5) and the two side parts (6).

8. Battery frame according to claim 1 or 7, **characterized in that** water is bound in the mineral-containing textile.

9. Battery frame according to any one of the preceding claims 2 to 8, **characterized in that** the outlet opening (15) and the passage opening (17) of a front side part (10, 11) are arranged at a distance from one another in the height direction (26).

10. Battery frame according to any of the preceding claims, **characterized in that** the front front-side part (10) in the charging direction (12) of the housing (2) is arranged removably on the housing (2).

## Revendications

1. Cadre de batterie destiné à recevoir un module d'accumulateur lithium-ion présentant des cellules prismatiques au lithium-ion, avec un boîtier (2) fournissant un espace de logement (3) pour le module d'accumulateur, boîtier qui est réalisé ouvert du côté frontal et présente une partie de fond (4), une partie de plafond (5) et deux parties de paroi latérale (6) reliant la partie de fond (4) à la partie de plafond (5), avec une tôle de séparation (9) disposée à distance de la partie de plafond en laissant un espace de fente (7), tôle de séparation qui présente des ouvertures de passage (9) pour former une liaison fluidique entre l'espace de fente (7) et l'espace de logement (3), ainsi qu'avec deux parties frontales (10, 11) pour une fermeture frontale du boîtier (2), les parties frontales (10, 11) présentent chacune un canal d'écoulement (13) en forme de labyrinthe pour un raccordement fluidique de l'espace de fente (7) à l'atmosphère entourant le boîtier (2), **caractérisé en ce que** le boîtier (2) est entouré au moins par sections par une enveloppe en textile contenant des minéraux.

2. Cadre de batterie selon la revendication 1, **caractérisé en ce qu'**une partie frontale (10, 11) est réalisée à double paroi et présente une tôle extérieure (14) avec une ouverture de sortie (15) et une tôle à branchies (16) espacée de celle-ci avec une ouverture de passage (17).

3. Cadre de batterie selon la revendication 1 ou 2, **caractérisé en ce qu'**un matériau non tissé est disposé dans les canaux d'écoulement (13) des parties frontales (10, 11) et/ou dans l'espace de fente (7) fourni par le boîtier (2).

4. Cadre de batterie selon l'une quelconque des revendications précédentes, **caractérisé en ce qu'**un écarteur (22) est associé à la partie frontale (11) situé à l'arrière dans le sens de chargement (12) du boîtier (2), le module d'accumulateur s'appuyant contre ledit écarteur à l'état de montage final.

5. Cadre de batterie selon la revendication 4, **caractérisé en ce que** l'écarteur (22) est une pièce de tôle qui s'étend entre la partie de fond (4) et la tôle de séparation (8).

6. Cadre de batterie selon la revendication 5, **caractérisé en ce que** l'écarteur (22) et la tôle de séparation (8) sont formées d'une seule pièce en tant que tôle pliée.

7. Cadre de batterie selon la revendication 1, **caractérisé en ce que** l'enveloppe s'appuie extérieurement sur la partie de fond (4), sur la partie de plafond (5) et sur les deux parties de paroi latérale (6).

8. Cadre de batterie selon la revendication 1 ou 7, **caractérisé en ce que** de l'eau est liée dans le textile contenant des minéraux.

9. Cadre de batterie selon l'une quelconque des revendications précédentes 2 à 8, **caractérisé en ce que** l'ouverture de sortie (15) et l'ouverture de passage (17) d'une partie frontale (10, 11) sont disposées à distance l'une de l'autre dans le sens de la hauteur (26).

10. Cadre de batterie selon l'une quelconque des revendications précédentes, **caractérisé en ce que**, dans le sens de chargement (12) du boîtier (2), la partie frontale avant (10) est disposée de manière amovible sur le boîtier (2).
